(19) Europäisches Patentamt
European Patent Office
Office européen des brevets

(11) **EP 4 250 240 A1**

(12) **EUROPEAN PATENT APPLICATION**
published in accordance with Art. 153(4) EPC

(43) Date of publication:
**27.09.2023 Bulletin 2023/39**

(21) Application number: **22905466.3**

(22) Date of filing: **19.12.2022**

(51) International Patent Classification (IPC):
**G06T 17/20** (2006.01)  **G06T 19/00** (2011.01)
**G06N 3/08** (2023.01)

(52) Cooperative Patent Classification (CPC):
**G06N 3/08; G06T 17/20; G06T 19/00**

(86) International application number:
**PCT/KR2022/020679**

(87) International publication number:
**WO 2023/113571 (22.06.2023 Gazette 2023/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.12.2021 KR 20210181947**
**16.12.2022 KR 20220177449**

(71) Applicant: **CLO Virtual Fashion Inc.**
**Seoul 06039 (KR)**

(72) Inventors:
• **JU, Eun Jung**
**Seoul 06039 (KR)**
• **CHOI, Myung Geol**
**Seoul 06039 (KR)**
• **SHIM, Eung June**
**Seoul 06039 (KR)**

(74) Representative: **V.O.**
**P.O. Box 87930**
**2508 DH Den Haag (NL)**

(54) **THREE-DIMENSIONAL FABRIC DRAPING SIMULATION METHOD AND DEVICE**

(57)    A method of a draping simulation of 3-dimensional (3D) fabric includes receiving a plurality of physical property parameters, generating a mesh by applying the physical property parameters to a neural network, in which the neural network learns a correlation between the physical property parameters and the mesh in which the 3D fabric is draped on an object, and generating a draping simulation result of the 3D fabric on the object, based on the generated mesh.

```
                    ( Start )
                        |
  Receive plurality of physical property parameters        ~110
                        |
  Generate mesh by applying physical property parameters to
  neural network, in which neural network learns correlation
         between physical property parameters and            ~120
       mesh in which 3D fabric is draped on object
                        |
  Generate draping simulation result of 3D fabric on object,
              based on generated mesh                        ~130
                        |
                    ( End )
```

FIG. 1

# Description

## Technical Field

The following embodiments relate to a method and devices for a 3-dimensional (3D) fabric draping simulation.

## Background Art

A garment appears 3-dimensional (3D) when worn by a person, but the garment is more 2D because the garment is a combination of pieces of fabric cut according to a 2D pattern. Because fabric, that is, a material of a garment, is flexible, the shape of the fabric may vary depending on the body shape or movement of a person wearing the garment.

A 3D garment simulation may be performed to find an optimal simulation physical property parameter for fabric that is desired by a user. An optimal physical property parameter may mean a physical property parameter for outputting a draping simulation result as similar as possible to the shape of actual fabric. However, a relationship between physical property parameters and a change of the shape of draped 3D fabric may be largely nonlinear and not intuitive. Accordingly, even for a design expert, finding the optimal physical property parameter for fabric may be very difficult.

Therefore, a process of tuning a physical property parameter to find the optimal physical property parameter may require the obtaining of the draping simulation result as similar as possible to the shape of actual fabric. There is growing interest in a user interface that is optimized for the user to tune a physical property parameter and neural network-related technology for accurately outputting a draping simulation result corresponding to an adjusted physical property parameter.

The above description is information the inventor(s) acquired during the course of conceiving the present disclosure, or already possessed at the time, and was not necessarily publicly known before the present application was filed.

## Disclosure of the Invention

## Technical Solutions

According to an aspect, a method of a draping simulation of 3-dimensional (3D) fabric includes receiving a plurality of physical property parameters; generating a mesh by applying the physical property parameters to a neural network, in which the neural network learns a correlation between the physical property parameters and the mesh in which the 3D fabric is draped on an object; and generating a draping simulation result of the 3D fabric on the object, based on the generated mesh.

The physical property parameters may include parameters input through a first area, that is, a user interface configured to receive a user input of the physical property parameters.

The receiving the physical property parameters may include receiving fabric information from a user; and obtaining the physical property parameters matching with the fabric information, based on the fabric information.

The fabric information may include at least one of a fabric type, a fabric combination, and a fabric weight.

The receiving the fabric information may include receiving an image including a fabric texture from the user; and obtaining the fabric information based on the fabric texture.

The method may further include, prior to the receiving the physical property parameters, setting a constraint on a user input of the physical property parameters, based on correlation information between the physical property parameters.

The correlation information may include information determined based on a distribution of physical property parameters corresponding to fabric.

The correlation information may include information converting a correlation between at least three physical property parameters into a correlation between two parameters.

The physical property parameters may include at least one of a stretch force parameter, a bending force parameter, and a density parameter.

The stretch force parameter may include at least one of a weft stretch force parameter, a warp stretch force parameter, and a shear force parameter.

The bending force parameter may include at least one of a weft bending force parameter, a warp bending force parameter, and a diagonal bending force parameter.

The generating the mesh may include generating contour information of the 3D fabric draped on the object by applying the physical property parameters to a neural network; and generating the mesh based on the contour information.

The contour information may include 3D coordinates corresponding to a contour of the 3D fabric draped on the object.

The generating the draping simulation result of the 3D fabric may include generating a first mesh on a portion of fabric corresponding to an upper surface of the object; generating a second mesh along an outer line of the upper surface of the object; and generating a third mesh between the second mesh and a contour.

The method may further include outputting the draping simulation result of the 3D fabric through a second area where the draping simulation result is displayed. The draping simulation result of the 3D fabric may include at least one of mesh data related to a physical property of the 3D fabric, normal map data related to a texture of the 3D fabric, and graphic data related to a visual property of the 3D fabric.

The draping simulation result of the 3D fabric may further include at least one of thickness data of the 3D fabric and texture data of the 3D fabric in a form combinable with the mesh data.

The method may further include outputting image data corresponding to the draping simulation result through a third area, in which the image data includes image data capturing the 3D fabric draped on the object.

The method may further include displaying a constraint on a slide bar configured to input the physical property parameters.

The receiving the physical property parameters may include receiving, through a network, the physical property parameters input through a user terminal. The draping simulation result may be transmitted through the network to the user terminal.

According to an aspect, a simulation device for a 3D fabric draping simulation includes a user interface; a memory; and a processor. The processor may receive a plurality of physical property parameters, generate a mesh by applying the physical property parameters to a neural network, in which the neural network learns a correlation between the physical property parameters and the mesh in which the 3D fabric is draped on an object, and generate a draping simulation result of the 3D fabric on the object, based on the generated mesh.

Effects

According to an aspect, by using a neural network learning a correlation between physical property parameters and a contour of a 3D fabric draped on an object, a change of a draping simulation according to a change of the physical property parameters may be immediately verified.

According to an aspect, by using a trained neural network, a draping simulation result corresponding to adjusted physical property parameters may be immediately verified.

According to an aspect, by outputting a user interface for tuning physical property parameters on a screen, a user may readily adjust the physical property parameters.

According to an aspect, a user interface may be useful for understanding a correlation between physical property parameters and a draping simulation result.

According to an aspect, based on correlation information between physical property parameters, by setting a constraint on an input of a physical property parameter, a user may obtain a draping simulation result by using a correlation between the physical property parameters.

Brief Description of Drawings

FIG. 1 is a flowchart illustrating a method of a 3-dimensional (3D) fabric draping simulation, according to an embodiment.
FIG. 2 is a diagram illustrating a process of generating a draping simulation result of 3D fabric, according to an embodiment.
FIG. 3A is a diagram illustrating a user interface for tuning physical property parameters, according to an embodiment.
FIG. 3B is a diagram illustrating a screen where a constraint is set on a user input of physical property parameters.
FIG. 4 is a diagram illustrating a process of draping 3D fabric on an object, according to an embodiment.
FIG. 5 is a block diagram illustrating a simulation device according to various embodiments.

Best Mode for Carrying Out the Invention

The following structural or functional descriptions are exemplary to merely describe the embodiments, and the scope of the embodiments is not limited to the descriptions provided in the present specification.

Although terms of "first" or "second" are used to explain various components, the components are not limited to the terms. These terms should be used only to distinguish one component from another component. For example, a "first" component may be referred to as a "second" component, or similarly, and the "second" component may be referred to as the "first" component within the scope of the right according to the concept of the present disclosure.

It should be noted that if it is described that one component is "connected", "coupled", or "joined" to another component, a third component may be "connected", "coupled", and "joined" between the first and second components, although the first component may be directly connected, coupled, or joined to the second component. On the contrary, it should be noted that if it is described that one component is "directly connected", "directly coupled", or "directly joined" to another component, a third component may be absent. Expressions describing a relationship between components, for example, "between", directly between", or "directly neighboring", etc., should be interpreted to be alike.

The singular forms "a", "an", and "the" are intended to include the plural forms as well, unless the context clearly indicates otherwise. It should be further understood that the terms "comprises" and/or "comprising," when used in this specification, specify the presence of stated features, integers, steps, operations, elements, components or a combination thereof, but do not preclude the presence or addition of one or more of other features, integers, steps, operations, elements, components, and/or groups thereof.

Unless otherwise defined, all terms, including technical and scientific terms, used herein have the same meaning as commonly understood by one of ordinary skill in the art to which this disclosure pertains. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

Hereinafter, examples will be described in detail with reference to the accompanying drawings. In the drawings, like reference numerals are used for like elements.

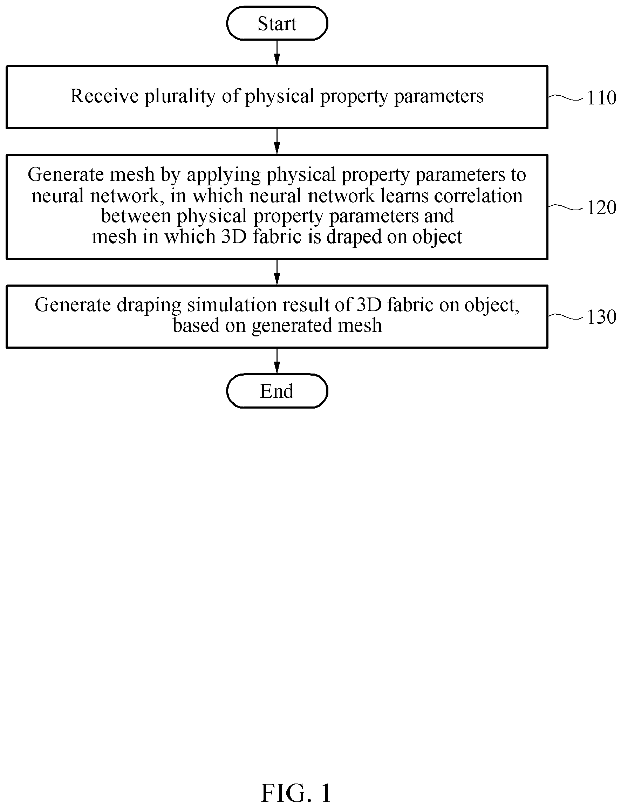

FIG. 1 is a flowchart illustrating a method of a 3-dimensional (3D) fabric draping simulation, according to an embodiment.

According to an embodiment, a method of determining a physical property parameter may be as follows. First, the physical property of fabric may be measured, and an initial value of the physical property parameter may be obtained. To this end, most pieces of 3D garment simulation software may include a measuring device for their own simulator. However, the accuracy of the initial value of the physical property parameter obtained by the measuring device may not be sufficient for being used to develop an actual product. For example, a draping simulation result of 3D fabric to which the initial value of the physical property parameter is applied may not be sufficiently similar to a draping result of actual fabric. Therefore, as a next operation, the tuning of the physical property parameter may be required. The tuning of the physical property parameter may basically mean repeating a process of adjusting the physical property parameter. For example, the process of adjusting the physical property parameter may include a process of adjusting the physical property parameter according to a user's intuition and simulating and verifying a draping result of the 3D fabric corresponding to the adjusted physical property parameter. However, at least tens of seconds may be required to complete a draping simulation of the 3D fabric. Accordingly, at least tens of minutes or an hour may be required to complete the tuning of the physical property parameter for a certain piece of fabric. Therefore, decreasing a time required for the draping simulation of the 3D fabric in the tuning of the physical property parameter may be important.

The physical property parameter may include a parameter converting, through an algorithm, values measured by the measuring device. For example, a user may measure a bending angle of a fabric sample that is in a certain position. A simulation device may calculate a bending force parameter, that is, a physical property parameter, based on the bending angle.

In addition, the physical property parameter may be estimated through machine learning. A machine learning approach may include an optimization method and a supervised learning method. The optimization method may be a method of finding an optimal value while adjusting the physical property parameter until a draping simulation result that is sufficiently similar to target draping is regenerated. The supervised learning method may be a method of training a correlation between the physical property parameter and a draping shape.

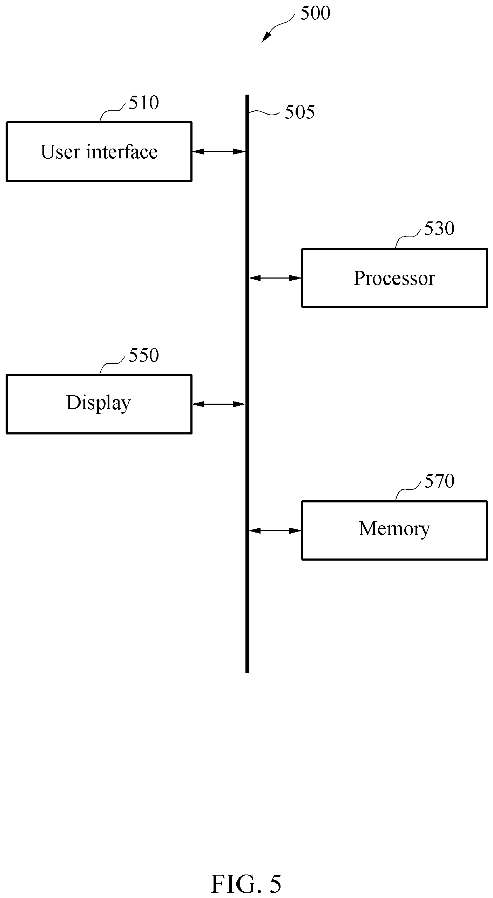

According to an embodiment, a simulation device (e.g., a simulation device 500 of FIG. 5) may receive a plurality of physical property parameters in operation 110. The physical property parameters may refer to parameters representing the physical property of fabric. The physical property parameters may include at least one of a stretch force parameter, a bending force parameter, and a density parameter. Stretch may be a repulsive force against at least one of stretch in horizontal, vertical, and diagonal directions. The stretch may be the property of stretching and contracting of fabric. A bending force may be a repulsive force against the bending of fabric. Density may be measured by dividing the mass of fabric by the total area of the fabric.

The stretch force parameter may include at least one of a weft stretch force parameter, a warp stretch force parameter, and a shear force parameter. A shear force may be a force acting parallel to a side in an object when forces of the same magnitude in opposite directions simultaneously act on the object. The weft stretch force parameter may include at least one of a weft stretch rest parameter and a weft stretch slope parameter. The warp stretch force parameter may include at least one of a warp stretch rest parameter and a warp stretch slope parameter. The shear force parameter may include at least one or both of a right shear force parameter and a left shear force parameter. The right shear force parameter may include at least one of a stretch rest of a right shear force and a stretch slope of a right shear force. The left shear force parameter may include at least one of a stretch rest of a left shear force and a stretch slope of a left shear force.

The bending force parameter may include at least one of a weft bending force parameter, a warp bending force parameter, a right shear bending force parameter, a left shear bending force parameter, and a diagonal bending force parameter. The weft may be a thread of a horizontal direction of fabric, which may be also referred to as a 'weft thread'. In addition, the warp may be a thread of a vertical direction of the fabric, which may be also referred to as a 'warp thread'.

The fabric herein may include fabric, knit, or felt. For example, the fabric may include at least one of natural fiber fabric, synthetic fiber fabric, blended yarn fabric, such as cotton, linen, wool, polyester, nylon, and elastane, dobby/jacquard, jersey, dobby, jacquard/brocade, plain, double knit/interlock, clip jacquard, mesh/tulle, twill, lace, rib, crepe/crepe de chine (CDC), corduroy, challis, chiffon, vegan leather, flannel, denim, velvet, tweed, satin, dewspo, polyvinyl chloride (PVC), raschel, double weave, eyelet, fleece, gauze/double gauze, vegan fur, chambray/oxford, sequin, tricot, French terry, organza, vegan suede, Ponte, polar fleece, neoprene/scuba, ripstop, seersucker, boucle, poplin, voile, canvas, velour, georgette, pique, polyester/rayon/spandex (TRS), taffeta, Melton/boiled, loop terry, crepe jersey, waffle, sherpa, pointelle, memory, plaid, and Tyvek.

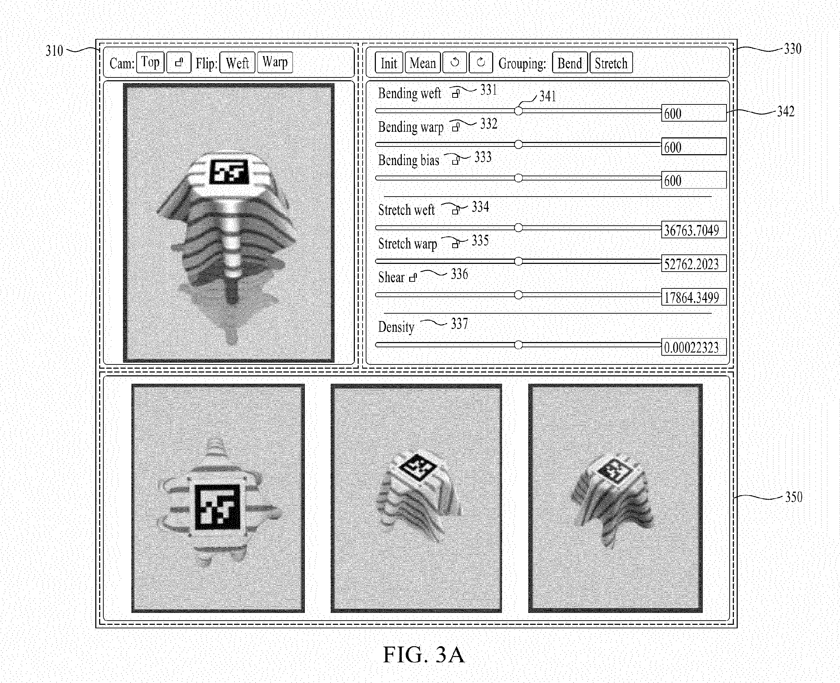

The physical property parameters may include parameters input through a first area, that is, a user interface for receiving a user input of the physical property parameters. Referring to FIG. 3A, physical property parameters may be displayed in a first area 330. In addition, an input element for receiving a user input of the physical property parameters may be displayed in the first area 330. The first area 330 may include at least one of a weft bending force parameter 331, a warp bending force parameter 332, a diagonal bending force parameter 333 (for example, a diagonal bending force parameter may be also referred to as a bending bias), a weft stretch force parameter 334, a warp stretch force parameter 335, a shear force parameter 336, and density 337. A user may input a physical property parameter value through the first area 330 by using a physical property parameter input element 341. A physical property parameter value adjusted by the physical property parameter input element 341 may be displayed in a sub-area 342 for outputting a value corresponding to a physical property parameter.

A correlation between physical property parameters and a contour of 3D fabric draped on an object may be a log-linear relationship. Accordingly, the input element of the physical property parameters displayed in the first area 330 of FIG. 3A may be a logarithmic slider.

According to an embodiment, the simulation device 500 may set a constraint on a user input of physical property parameters, based on correlation information between the physical property parameters. The physical property parameters corresponding to actual fabric may have a close correlation to one another. For example, when a weft stretch force is 10, a warp stretch force may be in a range of 8 to 12. As another example, when the weft stretch force is 10, a weft bending force may be in a range of 3 to 5. Therefore, by setting a constraint on physical property parameters possible to be input by the user, based on the correlation information between the physical property parameters, the user may obtain a draping simulation result of 3D fabric that is similar to an actual draping result through the constraint set by the simulation device 500 even without knowing the correlation between the physical property parameters.

According to an embodiment, the correlation information may be information determined based on a distribution of physical property parameters corresponding to fabric. For example, the distribution of the physical property parameters may vary depending on whether the fabric is natural fiber fabric or synthetic fiber fabric. Accordingly, the simulation device 500 may generate the correlation information between the physical property parameters, based on the distribution of the physical property parameters.

According to an embodiment, the correlation information may include information converting a correlation between at least three physical property parameters into a correlation between two parameters. For example, when there are 8 physical property parameters, the property of fabric may be expressed in 8 dimensions. A simulation device may decrease the property expressed in 8 dimensions to 2 dimensions by using a dimension reduction method. For example, the simulation device 500 may convert a correlation between 8 physical property parameters into a correlation between 2 physical property parameters. The dimension reduction method may include, for example, at least one of a linear method, a nonlinear method, and a deep learning method, but examples are not limited thereto. The simulation device 500 may convert a correlation between three or more physical property parameters into a correlation between two parameters through at least one of the linear method, the nonlinear method, and the deep learning method. The linear method may include at least one of principal component analysis and linear discriminant analysis. The nonlinear method may include at least one of kernel principal component analysis (kernel PCA) and t-distributed stochastic neighbor embedding (t-SNE). The deep learning method may include at least one of auto-encoders and variational auto-encoders (VAEs).

According to an embodiment, fabric information (e.g., a fabric type, a fabric combination, and a fabric weight) may be input by the user, and a plurality of physical property parameters matching with the input fabric information may be obtained. The physical property parameters matching with the fabric information may be obtained from a database in a lookup table form or other forms or may be obtained by processing (e.g., interpolation, etc.) information stored in the database. Alternatively, the physical property parameters matching with the fabric information may be inferred by a pretrained neural network.

According to an embodiment, an image (e.g., an image (closely) capturing fabric, etc.) including the texture of fabric may be input by the user, and the fabric information may be obtained based on the texture of the fabric. For example, the fabric type may be estimated based on the weaving of the texture included by the image. When the fabric information is obtained, the physical property parameters matching with the fabric information may be obtained.

According to an embodiment, the simulation device 500 may generate, in operation 120, a mesh in which 3D fabric is draped on an object by applying the physical property parameters to a neural network. The neural network may include a neural network learning a correlation between the physical property parameters and the mesh in which the 3D fabric is draped on the object. The object may be an object used for a draping simulation of fabric. The object may be, for example, a 3D cylindrical cylinder, but examples are not limited thereto. A cylinder herein may have various shapes other than a cylindrical shape. As another example, the object may be a 3D avatar. When the object is the 3D avatar, the simulation device 500 may generate a simulation result of draping a garment made of the fabric on the 3D avatar. To generate the simulation result of draping the garment on the 3D avatar, the simulation device 500 may use a mesh-net.

The neural network may include a fully connected layer. An input layer and an output layer that are included by the neural network herein may respectively include, for example, 7 (the number of physical property parameters) nodes and 732 (the number of 3D contour coordinates) nodes, but examples are not limited thereto. The neural network may include, for example, 5 hidden layers, and the respective number of nodes of the hidden layers may each be 512, 4096, 4096, 4096, and 8192, but examples are not limited thereto. The neural network may use, for example, an activation function (e.g., a rectified linear unit (ReLU)) for each layer except for the output layer, but examples are not limited thereto.

Training data may be required to train the neural network. The simulation device 500 may randomly sample physical property parameters to collect the training data and execute simulation based on the sampled physical property parameters. The simulation device 500 may exclude unsuitable physical property parameters that may be physically impossible for sampling or that may not be related to fabric. Such invalid physical parameters may cause a divergence problem in a simulation and unnecessarily expand a spatial area of physical property parameters, and thus, the neural network may not be readily trained. To avoid such a risk, physical property parameters may be sampled according to a probability distribution of verified physical property parameter sets. The simulation device 500 may store verified physical property parameter sets for a plurality of types of fabric. For example, a Gaussian mixture model (GMM) including 5 components may be suitable for 400 physical property parameters. The simulation device 500 may perform a large amount of physical property parameter sampling according to a probability distribution of the GMM.

Physical property parameters, that is, input data applied to the neural network, may be normalized by logarithmic transformation. For example, the physical property parameters may be adjusted in a range of [0, 1]. The logarithmic transformation may be based on a prior research result that a correlation between a change of physical property parameters and a change of a draping shape is in a log linear relationship.

According to an embodiment, the simulation device 500 may train the neural network by defining a mesh of 3D fabric itself as output data. However, when using mesh data of the 3D fabric as the training data, the neural network may get excessively complex and negatively affect prediction accuracy.

According to an embodiment, the simulation device 500 may define a contour (e.g., an edge curve) of the 3D fabric as the output data and train the neural network. The contour of the 3D fabric may be defined as the output data because a draping simulation result of the 3D fabric may be assumed to be estimated from the contour of the 3D fabric. This assumption is reasonable because wrinkled fabric may be excluded from the training of the neural network and any external force other than gravity is not considered. When there are 244 uniformly sampled 3D points on the contour, the 3D points may be expressed as a sequence, and the contour may be expressed as a 732-dimensional vector.

According to an embodiment, the simulation device 500 may sample a plurality of physical property parameter sets (e.g., 100,000 sets) by using the GMM. Then, the simulation device 500 may execute a draping simulation of the 3D fabric by using each of the sampled physical property parameter sets. In addition, when a simulation result does not converge to one shape after a certain time, or when a final draping shape is determined to be not a general fabric form (e.g., too droopy or falling to the ground), the simulation device 500 may remove such cases from the training data. The size of training data that is finally used for the training of the neural network may be, for example, 92,600, but examples are not limited thereto. The simulation device 500 may use 80% of data obtained in the above method for the training of the neural network and divide the remaining 20% of the data into halves and respectively use the divided pieces of data as test data and verification data. The simulation device 500 may train the neural network for 300 epochs by using, for example, a mean square error loss function and an Adam optimizer, but examples are not limited thereto. The simulation device 500 may calculate, for example, an error of each prediction in millimeters to intuitively understand the prediction error of the neural network.

Equation 1

$$E_m(y, \bar{y}) = \frac{1}{n} \sum_{i=1}^{n} \|y_i - \bar{y}_i\|,$$

In Equation 1, $y_i$ and $\bar{y}_i$ respectively denote an actual contour and 244 (= n) sampled points of a predicted contour.

Contour information may include 3D coordinates corresponding to a contour of 3D fabric draped on an object. The 3D coordinates corresponding to the contour may include coordinates of 3D points corresponding to a contour of fabric on an object (e.g., a 3D geometric object, such as a cylindrical cylinder). The simulation device 500 may sample 3D points corresponding to the contour of the 3D fabric from a 3D scanned image or a depth image including a 3D contour of the fabric on the object and generate the contour information through a process of obtaining the coordinates of the sampled 3D points.

At least some area of the fabric may be on the object and supported by the object, and the rest of the area may not be supported by the object and be slid down under the influence of gravity. Accordingly, the contour of the 3D fabric draped on the object may be formed by an outer line of the rest of the area of the fabric that is not supported by the object and slid down.

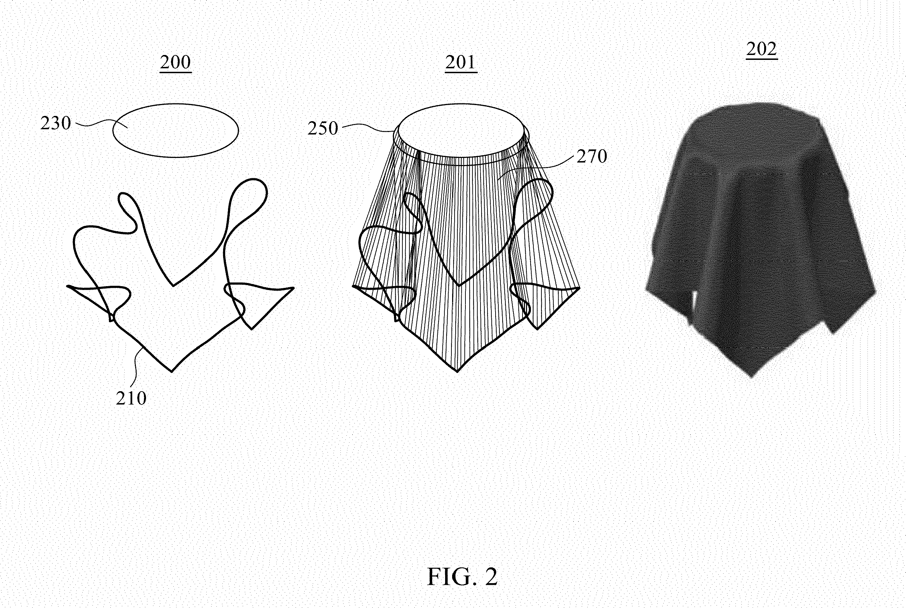

According to an embodiment, the simulation device 500 may generate a draping simulation result of the 3D fabric draped on the object based on the generated mesh in operation 130. The draping simulation result of the 3D fabric is described in detail with reference to FIG. 2. FIG. 2 illustrate a process of generating a simulation result through operations 200, 201, and 202. According to an embodiment, the simulation device 500 may generate contour information corresponding to physical property parameters applied to a neural network by using the neural network. In addition, the simulation device 500 may generate a contour 210 of 3D fabric draped on an object, based on information included by the contour information. According to an embodiment, the simulation device 500 may generate a first mesh on a portion 230 of fabric corresponding to an upper surface of the object. The first mesh may be, for example, a circular mesh, but examples are not limited thereto. The simulation device 500 may set the position of the first mesh higher than the upper surface of the object, based on the thickness of the fabric. According to an embodiment, the simulation device 500 may generate a second mesh 250 along an outer line of the upper surface. When the object is a cylindrical cylinder as illustrated in FIG. 2, the second mesh 250 may be, for example, a ring-shaped triangular strip mesh, but examples are not limited thereto. In this case, the width of the second mesh 250 may be 4 mm. Accordingly, when the object is the cylindrical cylinder, the upper surface of the object may be circular, and the outer line may be circular (hereinafter, a first circle). In addition, after generating another circle (hereinafter, a second circle) in a position apart from the circular outer line by 4 mm, the simulation device 500 may generate the second mesh 250 between the first circle and the second circle. In this case, the position of the second circle may be, for example, lower than the first circle by 4 mm, but examples are not limited thereto. The simulation device 500 may use the second mesh 250 to smooth the draping around the outer line of the upper surface of the object. According to an embodiment, the simulation device 500 may generate a third mesh 270 between the contour 210 and the second mesh 250. When the object is the cylindrical cylinder, the simulation device 500 may generate, for example, the third mesh 270 between the contour 210 and the second circle, but examples are not limited thereto. Accordingly, the simulation device 500 may ultimately generate a simulation result 202 of draping the 3D fabric on the object.

According to an embodiment, the simulation device 500 may output a draping simulation result of the 3D fabric through a second area where the simulation result is displayed. When the simulation device 500 is a server, the simulation device 500 may enable a user terminal to output the draping simulation result of the 3D fabric through the second area. When the simulation device 500 is the user terminal, the simulation device 500 may output the draping simulation result of the 3D fabric through the second area. Referring to FIG. 3A, the draping simulation result of the 3D fabric may be output through a second area 310. The second area 310 may be a portion of a user interface. A user may readily tune physical property parameters because the user may view, through the second area 310, the draping simulation result of the 3D fabric corresponding to the physical property parameters input through the first area 330. The simulation device 500 may reflect a physical property parameter value input through the first area 330 and output the draping simulation result of the 3D fabric through the second area 310.

In an embodiment, the draping simulation result of the 3D fabric may include at least one or various combinations of mesh data related to the physical property of the 3D fabric, normal map data related to the texture of the 3D fabric, and graphic data related to the visual property of the 3D fabric. For example, virtual fabric may include a mesh (physical property) + a normal map (texture) + graphics (visual properties, such as color, transparency, and reflection).

According to an embodiment, the draping simulation result of the 3D fabric may further include at least one of thickness data of the 3D fabric and texture data of the 3D fabric in a form combinable with the mesh data. For example, i) thickness and ii) texture may be added to the mesh and output. According to an embodiment, thickness information included by fabric information may be used for rendering. The thickness (e.g., an average, etc.) statistically processed according to fabric may be automatically reflected, and the user may input or change the thickness. In addition, the texture (normal + graphic) may be automatically applied according to the type of the fabric and may be changed by the user.

According to an embodiment, the simulation device 500 may output image data corresponding to a simulation result through a third area 350 of the user interface. The image data may include an image capturing fabric draped on an object. The image data may be data that may be referred by the user in the tuning of physical property parameters. Referring to FIG. 3A, the simulation device 500 may output the image data through the third area 350. The user may refer to the image data and determine whether the draping simulation result of the 3D fabric corresponding to the input physical property parameters is different from an actual draping result of the 3D fabric. When there is a difference between the simulation result and the actual draping result of the 3D fabric, the user may adjust the physical property parameters through the first area 330 and obtain an actual simulation result that is the same as or similar to the actual draping result. For example, images capturing the actual draping result from different viewpoints may be output through the third area 350, but examples are not limited thereto.

FIG. 2 is a diagram illustrating a process of generating a draping simulation result of 3D fabric, according to an embodiment.

Since the detailed description of FIG. 2 is provided above with reference to FIG. 1, the detailed description thereof is omitted.

FIG. 3A is a diagram illustrating a user interface for tuning physical property parameters, according to an embodiment.

Embodiments may be implemented as distributable software or web services. When implemented as web services, a server may drive a machine learning (ML) model, and a result may be displayed through a web viewer by receiving a user input online.

Referring to FIG. 3A, there may be another area where information is displayed, besides the first area 330, the second area 310, and the third area 350. In addition, some of the first area 330, the second area 310, and the third area 350 may be omitted.

Two or more draping simulation results of target fabric that are generated in different draping methods may be used to increase the tuning accuracy of physical property parameters. Therefore, the simulation device 500 may simultaneously output different draping simulation results on a screen. Since the user may view draping results generated respectively in a plurality of draping methods on one screen, the tuning accuracy of physical property parameters may increase. The simulation device 500 may output the draping simulation results generated in the different draping methods, for example, through the second area 310 where draping simulation results are displayed, but examples are not limited thereto.

Since the detailed description of FIG. 3A is provided above with reference to FIG. 1, the further detailed description thereof is omitted.

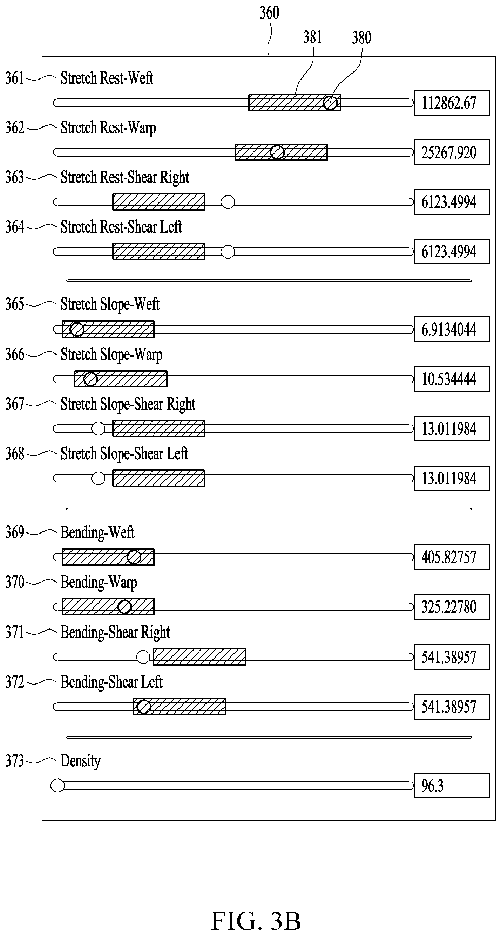

FIG. 3B is a diagram illustrating a screen where a constraint is set on a user input of physical property parameters.

A screen 360 of FIG. 3B illustrates a plurality of physical property parameters 361, 362, 363, 364, 365, 366, 367, 368, 369, 370, 371, 372, and 373. In addition, the simulation device 500 may receive an input of a physical property parameter value through a slide bar 380 on the screen 360.

According to an embodiment, the simulation device 500 may display a constraint 381 on the slide bar 380 for inputting a physical property parameter. A user may input a physical property parameter value in a range of the constraint 381. The simulation device 500 may determine a constraint based on a correlation between physical property parameters. In addition, the simulation device 500 may display the determined constraint on the slide bar 380.

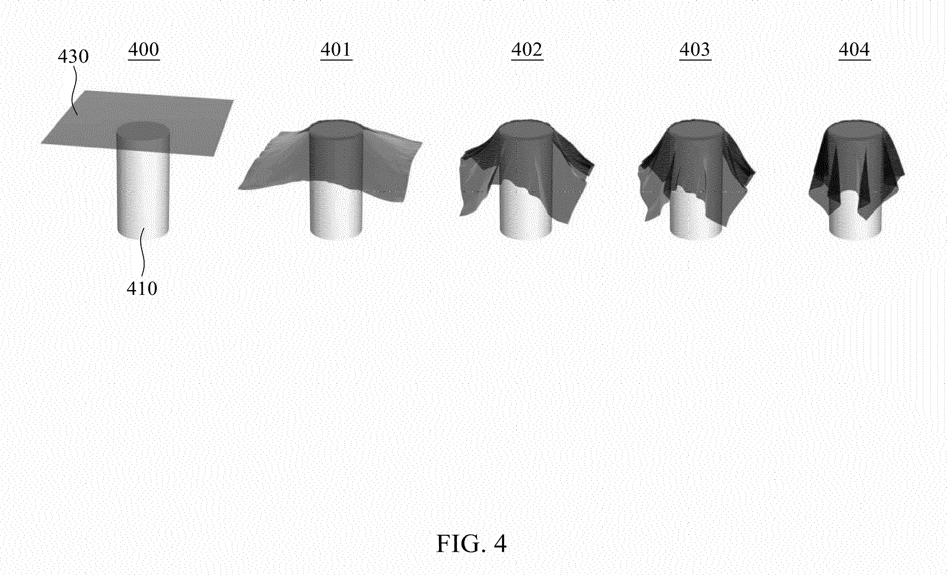

FIG. 4 is a diagram illustrating a process of draping 3D fabric on an object, according to an embodiment.

The 'draping' herein may be a process of placing fabric on the object, in which physical property parameters are reflected to the fabric. In addition, the draping may be a process of dressing a 3D avatar with a 3D garment made of fabric to which the physical property parameters of the fabric are reflected. Various draping methods may be used to analyze the feature of various pieces of fabric. A Cusick draping method, that is, one of the various draping methods, may be one of the most representative methods used in the textile industry. The Cusick draping method may start with an operation of placing a 30 cm sample on the upper surface of a cylindrical cylinder of which a diameter is 18 cm. A portion of fabric that is not supported by the cylindrical cylinder may be slid down and form a draping shape of the fabric. Another draping method may place a 30 cm X 30 cm square fabric sample on a cylindrical cylinder of which a diameter is 10 cm. In addition, the simulation device 500 may randomly sample vertices to establish a high-resolution fabric model. There may be 6,554 vertices and 12,862 triangular sides in a mesh model of a fabric sample at 5 mm intervals.

FIG. 4 illustrates a cylindrical cylinder 410, fabric 430, an initial state 400, intermediate states 401, 402, and 403, and a final state 404. From the initial state 400 to the final state 404, portions of fabric not touching the upper surface of the cylindrical cylinder 410 may be gradually slid down by gravity. A termination condition for determining the final state 404 may be a case where a processing speed for a vertex is less than or equal to a certain threshold value. A simulation time may be set to 0.033 minutes for all experiments, but examples are not limited thereto. A time taken to satisfy the termination condition may vary depending on physical property parameters. Some physical property parameters may likely delay the time taken to satisfy the termination condition.

FIG. 5 is a block diagram illustrating a simulation device according to various embodiments.

According to an embodiment, the simulation device 500 may be a server. According to another embodiment, the simulation device 500 may be a user terminal (e.g., a mobile device, a desktop computer, a laptop computer, a personal computer, etc.). Referring to FIG. 5, according to an embodiment, the simulation device 500 may include a user interface 510, a processor 530, a display 550, and a memory 570. The user interface 510, the processor 530, the display 550, and the memory 570 may be connected to one another through a communication bus 505.

The user interface 510 may receive a user input for each of a plurality of physical property parameters. The user interface 510 may receive the user input for each of the physical property parameters through, for example, a keyboard, a stylus pen, a mouse click, and/or a touch input through a user's finger.

The display 550 may display a simulation result of 3D fabric generated by the processor 530. The simulation device 500 may output at least one of the first area 330, the second area 310, and the third area 350 on the display 550.

The memory 570 may store the generated simulation result of 3D fabric. In addition, the memory 570 may store various pieces of information generated in the process of the processor 530 described above. In addition, the memory 570 may store various pieces of data, programs, and the like. The memory 570 may include a volatile memory or a non-volatile memory. The memory 570 may include a massive storage medium, such as a hard disk, and store the various pieces of data.

In addition, the processor 530 may perform one or more methods described with reference to FIGS. 1 through 3B or an algorithm corresponding to the one or more methods. The processor 530 may be a hardware-implemented data processing device including a circuit that is physically structured to execute desired operations. For example, the desired operations may include code or instructions in a program. The processor 530 may be implemented as, for example, a central processing unit (CPU), a graphics processing unit (GPU), or a neural network processing unit (NPU). For example, the simulation device 500 that is implemented as hardware may include, for example, a microprocessor, a CPU, a processor core, a multi-core processor, a multiprocessor, an application-specific integrated circuit (ASIC), and a field-programmable gate array (FPGA).

The processor 530 may execute a program and control the simulation device 500. The code of the program executed by the processor 530 may be stored in the memory 570.

The methods according to the above-described examples may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs and/or DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher-level code that may be executed by the computer using an interpreter. The above-described devices may be configured to act as one or more software modules in order to perform the operations of the above-described embodiments, or vice versa.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored by one or more non-transitory computer-readable recording mediums.

A number of embodiments have been described above. Nevertheless, it should be understood that various modifications may be made to these embodiments. Suitable results may be achieved if the described techniques are performed in a different order, and/or if components in a described system, architecture, device, or circuit are combined in a different manner, and/or replaced or supplemented by other components or their equivalents.

Accordingly, other implementations are within the scope of the following claims.

## Claims

1. A method of a draping simulation of 3-dimensional (3D) fabric, the method comprising:

   receiving a plurality of physical property parameters;
   generating a mesh by applying the physical property parameters to a neural network, wherein the neural network learns a correlation between the physical property parameters and the mesh in which the 3D fabric is draped on an object; and
   generating a draping simulation result of the 3D fabric on the object, based on the generated mesh.

2. The method of claim 1, wherein
   the physical property parameters comprise parameters input through a first area, that is, a user interface configured to receive a user input of the physical property parameters.

3. The method of claim 1, wherein
   the receiving the physical property parameters comprises:

   receiving fabric information from a user; and
   obtaining the physical property parameters matching with the fabric information, based on the fabric information.

4. The method of claim 3, wherein
   the fabric information comprises at least one of a fabric type, a fabric combination, and a fabric weight.

**5.** The method of claim 3, wherein
the receiving the fabric information comprises:

> receiving an image comprising a fabric texture from the user; and
> obtaining the fabric information based on the fabric texture.

**6.** The method of claim 1, further comprising:
prior to the receiving the physical property parameters, setting a constraint on a user input of the physical property parameters, based on correlation information between the physical property parameters.

**7.** The method of claim 6, wherein
the correlation information comprises information determined based on a distribution of physical property parameters corresponding to fabric.

**8.** The method of claim 6, wherein
the correlation information comprises information converting a correlation between at least three physical property parameters into a correlation between two parameters.

**9.** The method of claim 1, wherein
the physical property parameters comprise at least one of a stretch force parameter, a bending force parameter, and a density parameter.

**10.** The method of claim 1, wherein
the stretch force parameter comprises at least one of a weft stretch force parameter, a warp stretch force parameter, and a shear force parameter.

**11.** The method of claim 1, wherein
the bending force parameter comprises at least one of a weft bending force parameter, a warp bending force parameter, and a diagonal bending force parameter.

**12.** The method of claim 1, wherein
the generating the mesh comprises:

> generating contour information of the 3D fabric draped on the object by applying the physical property parameters to a neural network; and
> generating the mesh based on the contour information.

**13.** The method of claim 12, wherein
the contour information comprises 3D coordinates corresponding to a contour of the 3D fabric draped on the object.

**14.** The method of claim 1, wherein
the generating the draping simulation result of the 3D fabric comprises:

> generating a first mesh on a portion of fabric corresponding to an upper surface of the object;
> generating a second mesh along an outer line of the upper surface of the object; and
> generating a third mesh between the second mesh and a contour.

**15.** The method of claim 1, further comprising:

> outputting the draping simulation result of the 3D fabric through a second area where the draping simulation result is displayed, wherein
> the draping simulation result of the 3D fabric comprises:
> at least one of mesh data related to a physical property of the 3D fabric, normal map data related to a texture of the 3D fabric, and graphic data related to a visual property of the 3D fabric.

**16.** The method of claim 15, wherein
the draping simulation result of the 3D fabric further comprises at least one of thickness data of the 3D fabric and texture data of the 3D fabric in a form combinable with the mesh data.

**17.** The method of claim 1, further comprising:

> outputting image data corresponding to the draping simulation result through a third area, wherein
> the image data comprises image data capturing the 3D fabric draped on the object.

**18.** The method of claim 1, further comprising:
displaying a constraint on a slide bar configured to input the physical property parameters.

**19.** The method of claim 1, wherein
the receiving the physical property parameters comprises:

> receiving, through a network, the physical property parameters input through a user terminal, wherein
> the draping simulation result may be transmitted through the network to the user terminal.

**20.** A non-transitory computer-readable storage medium storing instructions that, when executed by a processor, cause the processor to perform the method of claim 1.

**21.** A simulation device for a 3D fabric draping simulation comprising:

> a user interface;
> a memory; and
> a processor, wherein

the processor is configured to

receive a plurality of physical property parameters,

generate a mesh by applying the physical property parameters to a neural network, wherein the neural network learns a correlation between the physical property parameters and the mesh in which the 3D fabric is draped on an object, and

generate a draping simulation result of the 3D fabric on the object, based on the generated mesh.

Start

Receive plurality of physical property parameters — 110

Generate mesh by applying physical property parameters to neural network, in which neural network learns correlation between physical property parameters and mesh in which 3D fabric is draped on object — 120

Generate draping simulation result of 3D fabric on object, based on generated mesh — 130

End

FIG. 1

FIG. 2

Cam: Top ⬚ Flip: Weft Warp — 310

Init Mean ↺ ↻ Grouping: Bend Stretch — 330

Bending weft ⬚ — 331   341
600 — 342

Bending warp ⬚ — 332
600

Bending bias ⬚ — 333
600

Stretch weft ⬚ — 334
36763.7049

Stretch warp ⬚ — 335
52762.2023

Shear ⬚ — 336
17864.3499

Density — 337
0.00022323

350

FIG. 3A

14

360

381 380

361 — Stretch Rest-Weft

112862.67

362 — Stretch Rest-Warp

25267.920

363 — Stretch Rest-Shear Right

6123.4994

364 — Stretch Rest-Shear Left

6123.4994

365 — Stretch Slope-Weft

6.9134044

366 — Stretch Slope-Warp

10.534444

367 — Stretch Slope-Shear Right

13.011984

368 — Stretch Slope-Shear Left

13.011984

369 — Bending-Weft

405.82757

370 — Bending-Warp

325.22780

371 — Bending-Shear Right

541.38957

372 — Bending-Shear Left

541.38957

373 — Density

96.3

FIG. 3B

FIG. 4

500

510

User interface

505

530

Processor

550

Display

570

Memory

FIG. 5

# INTERNATIONAL SEARCH REPORT

| International application No. |
|---|
| **PCT/KR2022/020679** |

### A. CLASSIFICATION OF SUBJECT MATTER

**G06T 17/20**(2006.01)i; **G06T 19/00**(2011.01)i; **G06N 3/08**(2006.01)i

According to International Patent Classification (IPC) or to both national classification and IPC

### B. FIELDS SEARCHED

Minimum documentation searched (classification system followed by classification symbols)

G06T 17/20(2006.01); A41H 1/00(2006.01); A41H 1/02(2006.01); B23Q 15/00(2006.01); D03D 3/00(2006.01); G05B 19/4069(2006.01); G06F 17/50(2006.01); G06Q 30/06(2012.01); G06T 7/60(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 천(fabric), 착장(draping), 시뮬레이션(simulation), 물성(physical property), 메쉬 (mesh), 사용자 인터페이스(user interface), 파라미터(parameter), 텍스처(texture), 밀도(density)

### C. DOCUMENTS CONSIDERED TO BE RELEVANT

| Category* | Citation of document, with indication, where appropriate, of the relevant passages | Relevant to claim No. |
|---|---|---|
| Y | KR 10-2130252 B1 (CLO VIRTUAL FASHION INC.) 06 July 2020 (2020-07-06)<br>See paragraphs [0039], [0080], [0082]-[0083], [0087] and [0102]; and claims 1 and 9. | 1-5,9-21 |
| A | | 6-8 |
| Y | KR 10-2224056 B1 (YESNOW INC.) 09 March 2021 (2021-03-09)<br>See claim 1. | 1-5,9-21 |
| Y | JP 2008-242516 A (AICHI PREFECTURE) 09 October 2008 (2008-10-09)<br>See claim 1. | 3-5 |
| Y | JP 2004-280267 A (SUMITOMO HEAVY IND. LTD.) 07 October 2004 (2004-10-07)<br>See claims 1-3. | 18 |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 March 2023** | **20 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| | International application No. |
|---|---|
| | **PCT/KR2022/020679** |

### C.    DOCUMENTS CONSIDERED TO BE RELEVANT

| Category* | Citation of document, with indication, where appropriate, of the relevant passages | Relevant to claim No. |
|---|---|---|
| A | KR 10-2009-0039091 A (THE INDUSTRY & ACADEMIC COOPERATION IN CHUNGNAM NATIONAL UNIVERSITY (IAC) et al.) 22 April 2009 (2009-04-22) See claims 1-6. | 1-21 |

Form PCT/ISA/210 (second sheet) (July 2022)

INTERNATIONAL SEARCH REPORT
Information on patent family members

International application No.

**PCT/KR2022/020679**

| Patent document cited in search report | | | Publication date (day/month/year) | Patent family member(s) | | | Publication date (day/month/year) |
|---|---|---|---|---|---|---|---|
| KR | 10-2130252 | B1 | 06 July 2020 | US | 11145098 | B2 | 12 October 2021 |
| | | | | US | 2021-0056743 | A1 | 25 February 2021 |
| KR | 10-2224056 | B1 | 09 March 2021 | | None | | |
| JP | 2008-242516 | A | 09 October 2008 | | None | | |
| JP | 2004-280267 | A | 07 October 2004 | | None | | |
| KR | 10-2009-0039091 | A | 22 April 2009 | | None | | |

Form PCT/ISA/210 (patent family annex) (July 2022)